# EUROPEAN PATENT APPLICATION

(11) **EP 4 052 895 A1**
(43) Date of publication of application: **07.09.2022**
(21) Application number: 22157550.9
(22) Date of filing: 18.02.2022
(51) Int. Cl.: B32B 5/02, B32B 3/12, B32B 5/18, B32B 15/01, B32B 15/08, B32B 27/10, B32B 25/08, B32B 15/06, B32B 15/12

(54) **MODULAR ARMOR FOR HARD UPPER TORSO OF AN ATMOSPHERIC SUIT**

(30) Priority: 02.03.2021 US 202117189769
(71) Applicant: Hamilton Sundstrand Corporation, Charlotte, NC 28217-4578 (US)
(72) Inventor: STRICKLAND, Julie, Houston, TX (US); FRANCISCO, Jay, Chula Vista, CA (US); SANZ MARTINEZ, Pablo T., San Diego, CA (US); KELFORD, Bryce Tyler, San Diego, CA (US); NOEL, Aaron Thomas, Poway, CA (US); CHEUNG, Alan, La Mesa, CA (US); NOLAN, Patrick J., Laguna Hills, CA (US); STANKIEWICZ, Thomas R., Tolland, CT (US)
(74) Representative: Dehns

(57) **Abstract**

Modular armor for a hard upper torso (HUT) of an atmospheric suit that maintains a specific atmosphere within the suit includes a first outer layer (310a) including a first surface and a second surface opposite the first surface and a second outer layer (310b) including a first surface and a second surface opposite the first surface. A core (115) is sandwiched between the first surface of the first outer layer (310a) and the first surface of the second outer layer (310b). The armor is fabricated such that the second surface of the first outer layer (310a) is conformally affixed to the HUT.

## Description

### BACKGROUND

Exemplary embodiments pertain to the art of space suits and, in particular, to modular armor for a hard upper torso of an atmospheric suit.

An atmospheric suit (e.g., space suit) includes several components that, together, provide a habitable environment (e.g., for an astronaut in deep space). The hard upper torso (HUT) forms a rigid enclosure about the upper body of the wearer and provides pressure containment for this part of the body. The HUT acts as a hub with structural attachment points for the arms, lower torso assembly (LTA), chest-mounted display and control modules, and primary life support subsystem (PLSS). The helmet attaches to an upper neck ring of the HUT. The HUT plays a load-bearing role by providing structural support to carry the PLSS, which is mounted to the back of the HUT, and the displays and control module (DCM), which is attached to the front of the HUT. The PLSS provides breathable oxygen, regulates pressure within the space suit, removes carbon dioxide and humidity, controls temperature, and may include communication equipment.

### BRIEF DESCRIPTION

In one embodiment, modular armor for a hard upper torso (HUT) of an atmospheric suit that maintains a specific atmosphere within the suit includes a first outer layer including a first surface and a second surface opposite the first surface, and a second outer layer including a first surface and a second surface opposite the first surface. The armor also includes a core sandwiched between the first surface of the first outer layer and the first surface of the second outer layer. The armor is fabricated such that the second surface of the first outer layer is conformally affixed to the HUT.

Additionally or alternatively, in this or other embodiments, the armor also includes a first adhesive layer between the first surface of the first outer layer and the core and a second adhesive layer between the first surface of the second outer layer and the core. The first adhesive layer adheres the first outer layer to the core, and the second adhesive layer adheres the second outer layer to the core.

Additionally or alternatively, in this or other embodiments, the first outer layer and the second outer layer are composite laminate layers.

Additionally or alternatively, in this or other embodiments, the core includes titanium, aluminum, paper core, or rubber.

Additionally or alternatively, in this or other embodiments, the first outer layer, the second outer layer, and the core are fabricated via additive manufacturing as a single component.

Additionally or alternatively, in this or other embodiments, the single component is fabricated using a thermoplastic or metal.

Additionally or alternatively, in this or other embodiments, the second surface of the first outer layer is affixed to the HUT with hook and loop fasteners, snaps, fasteners, or pins.

Additionally or alternatively, in this or other embodiments, the core is formed as a repeating pattern of cells, each cell being a space with a shape defined by cell walls, and the cell walls of each of the cells being parallel with the first outer layer and the second outer layer or being perpendicular to the first outer layer and the second outer layer.

Additionally or alternatively, in this or other embodiments, one or more of the cells is filled with foam.

In another embodiment, a hard upper torso (HUT) of an atmospheric suit that maintains a specific atmosphere within the suit includes an upper neck ring configured as an attachment to a helmet, and modular armor. The modular armor includes a first outer layer including a first surface and a second surface opposite the first surface, and a second outer layer including a first surface and a second surface opposite the first surface. A core is sandwiched between the first surface of the first outer layer and the first surface of the second outer layer. The armor is fabricated such that the second surface of the first outer layer is conformally affixed to the HUT.

Additionally or alternatively, in this or other embodiments, the modular armor further comprises a first adhesive layer between the first surface of the first outer layer and the core and a second adhesive layer between the first surface of the second outer layer and the core. The first adhesive layer adheres the first outer layer to the core and the second adhesive layer adheres the second outer layer to the core.

Additionally or alternatively, in this or other embodiments, the first outer layer and the second outer layer are composite laminate layers and the core includes titanium, aluminum, paper core, or rubber.

Additionally or alternatively, in this or other embodiments, the first outer layer, the second outer layer, and the core are fabricated as a single component using additive manufacturing.

Additionally or alternatively, in this or other embodiments, the single component is fabricated using a thermoplastic or metal.

Additionally or alternatively, in this or other embodiments, the second surface of the first outer layer is affixed to the HUT with hook and loop fasteners, snaps, fasteners, or pins.

Additionally or alternatively, in this or other embodiments, the core is formed as a repeating pattern of cells, each cell being a space with a shape being defined by cell walls, and the cell walls of each of the cells being parallel with the first outer layer and the second outer layer or being perpendicular to the first outer layer and the second outer layer.

Additionally or alternatively, in this or other embodiments, one or more of the cells is filled with foam.

In yet another embodiment, a method of assembling a hard upper torso (HUT) of an atmospheric suit that maintains a specific atmosphere within the suit to include modular armor includes forming a first outer layer including a first surface and a second surface opposite the first surface and forming a second outer layer including a first surface and a second surface opposite the first surface. The method also includes forming a core sandwiched between the first surface of the first outer layer and the first surface of the second outer layer. The second surface of the first outer layer is conformally affixed to the HUT.

Additionally or alternatively, in this or other embodiments, the method also includes adhering the first outer layer to the core with a first adhesive layer and adhering the second outer layer to the core with a second adhesive layer.

Additionally or alternatively, in this or other embodiments, the forming the first outer layer, the forming the second outer layer, and the forming the core is as a single component based on additive manufacturing.

### BRIEF DESCRIPTION OF THE DRAWINGS

The following descriptions should not be considered limiting in any way. With reference to the accompanying drawings, like elements are numbered alike:
FIG. 1 shows modular armor affixed to a hard upper torso (HUT) according to an exemplary embodiment;
FIG. 2 shows a space suit that includes modular armor for the HUT according to one or more embodiments;
FIG. 3 is an isometric exploded view of armor according to one or more embodiments;
FIG. 4 illustrates an exemplary profile shape of the armor according to one or more embodiments;
FIG. 5 shows exemplary attachment points 510 for affixing the armor to the HUT according to one or more embodiments;
FIG. 6A shows a cross-sectional view of armor according to an exemplary embodiment;
FIG. 6B shows a trimetric view of the core of the armor according to the exemplary embodiment;
FIG. 7A shows a cross-sectional view of armor according to an exemplary embodiment;
FIG. 7B shows an trimetric view of the core of the armor according to the exemplary embodiment;
FIG. 8 shows a perspective side view of armor according to an exemplary embodiment;
FIG. 9 shows a perspective side view of armor according to an exemplary embodiment;
FIG. 10 shows a perspective side view of armor according to an exemplary embodiment;
FIG. 11A shows an isometric view of a module of armor according to an exemplary embodiment; and
FIG. 11B shows a cross-sectional view of the armor according to the exemplary embodiment.

### DETAILED DESCRIPTION

A detailed description of one or more embodiments of the disclosed apparatus and method are presented herein by way of exemplification and not limitation with reference to the Figures.

As previously noted, a HUT is a part of an atmospheric suit, such as a space suit. The HUT maintains pressure within the suit and must also withstand impact, because a breach of the HUT can result in loss of pressure in the suit and may present a danger to the wearer. The HUT may include a rear entry door (RED) that facilitates donning and doffing he HUT from the back. The HUT must be thin enough and light enough (low mass) not to impede the mobility of the wearer of the suit. Thus, the HUT may be fabricated from fiberglass or another rigid material that is not bulky. However, this may make the HUT insufficient to withstand a fall or impact (e.g., of a micrometeoroid in deep space).

Embodiments detailed herein relate to modular armor for a HUT of an atmospheric suit. The modular armor may be attached to the HUT only where impact-absorption is deemed to be needed such that the effect on the overall mobility and weight of the HUT is minimized. While a space suit is discussed, in particular, for explanatory purposes, the HUT may also be part of another type of atmospheric suit (i.e., a suit that maintains a specific atmosphere within it). For example, in addition to being used in deep space (e.g., in an extravehicular mobility unit or space suit), the atmospheric suit including the HUT may be used in underwater (e.g., in an atmospheric diving suit), earth-based (e.g., in a hazmat suit or contamination suit), high-altitude (e.g., in a flight suit), and sub-surface applications.

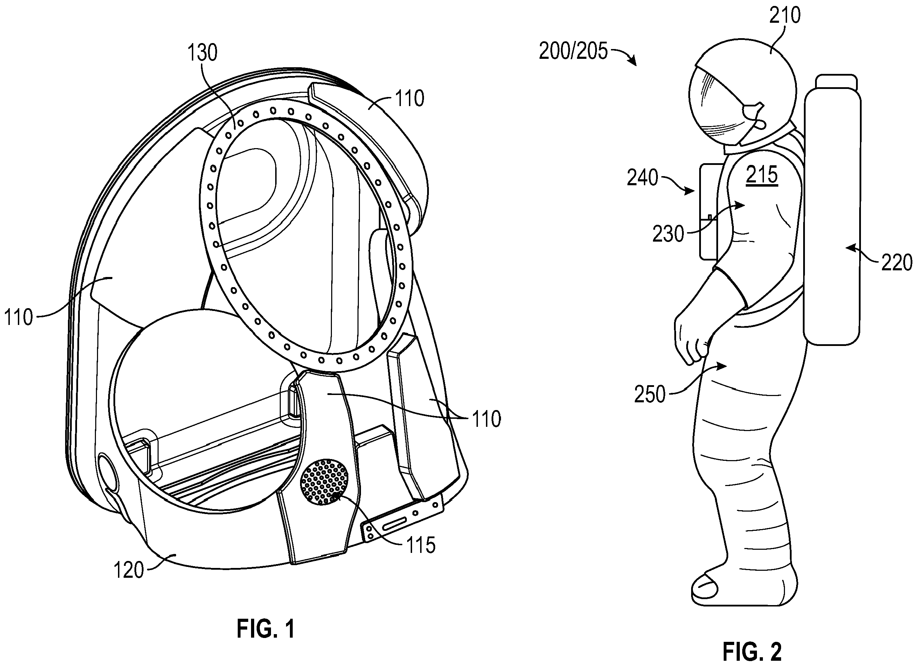

FIG. 1 shows modular armor 110 affixed to a HUT 120 according to an exemplary embodiment. As previously noted, the HUT 120 acts as an attachment point for other parts of the atmospheric suit 205 (e.g., space suit 200) (FIG. 2). For example, the HUT 120 includes an upper neck ring 130 to which the helmet 210 (FIG. 2) is attached. Four modules of armor 110 are shown in FIG. 1. A cut-out view exposes the core 115 of the armor 110 in one of the modules, as indicated. As indicated in FIG. 1, the armor 110 is conformally affixed to the HUT 120.

FIG. 2 shows a space suit 200, which is an exemplary embodiment of an atmospheric suit 205 that includes modular armor 110 for the HUT 120 according to one or more embodiments. The armor 110 and HUT 120 are not visible in the view of FIG. 2. The HUT 120 is covered by a thermal micrometeoroid garment (TMG) 215, for example. The components of the space suit 200 that are attached to the HUT 120 are shown. These attachments include the helmet 210, PLSS 220, arms 230, DCM 240, and LTA 250.

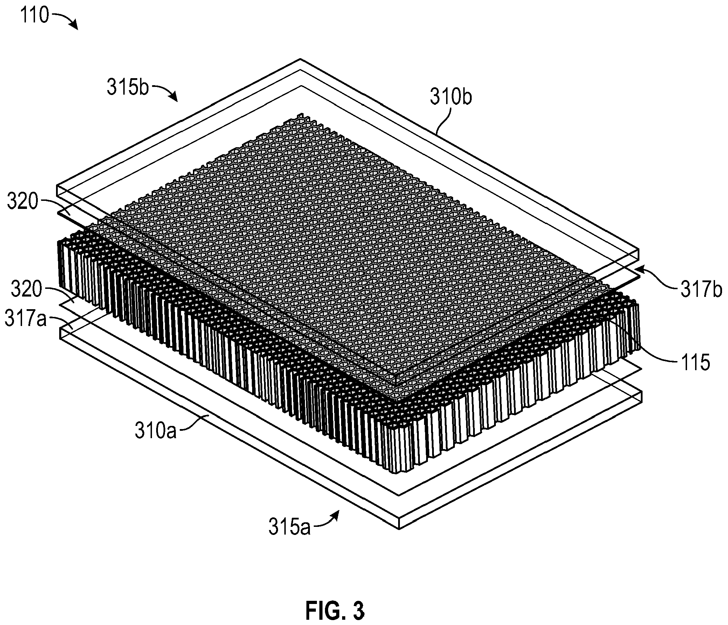

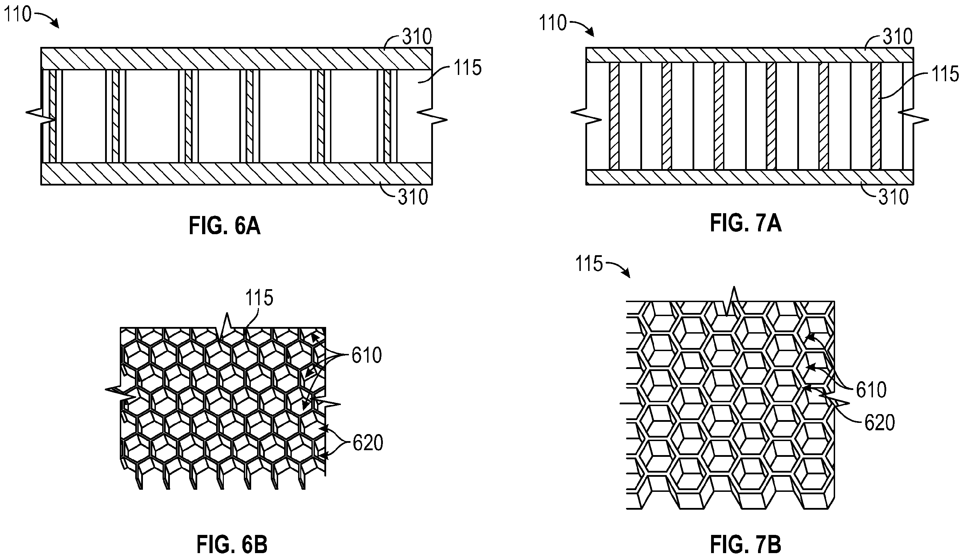

FIG. 3 is an isometric exploded view of armor 110 according to one or more embodiments. The armor 110 includes a first outer layer 310a with its first side 315a and second side 317a indicated and a second outer layer 310b with its first side 315b and second side 317b indicated. The first side 315a of the first outer layer 310a and the second side 317b of the second outer layer 310b are not visible in the view shown in FIG. 3. The first sides 315a, 315b (generally 315) of the outer layers 310 are on the outer surfaces of the armor 110, and one of the first sides 315 is affixed to the HUT 120. The outer layers 310 of the armor 110 provide puncture resistance and the core 115 provides impact absorption. The core 115 is further discussed with reference to FIGS 6-11.

According to an exemplary embodiment, the armor 110 is assembled from separate parts. In this case, an adhesive layer 320 on the second sides 317a, 317b (generally 317) of each of the outer layers 310a, 310b (generally 310) adheres the outer layers 310 to a core 115 that is sandwiched therebetween. The outer layers 310 may each be a composite laminate. The material of the outer layers 310 may be a fiberglass or carbon fiber that is pre-impregnated with a resin and cured. An initial curing may be performed for each of the outer layers 310 prior to stacking and curing other components of the armor 110. Alternately, all the components of the armor 110 may be cured together. The core 115 may be titanium, aluminum, paper core, or rubber, for example. Paper core refers to a pulped product that results from short fibers rolled with a resin into a sheet and then joined with other such sheets into a structure (e.g., honeycomb). According to alternate embodiments, the core 115 may be another metal or alloy.

According to an alternate embodiment, the armor 110 is additively manufactured. In this case, the first and second outer layers 310 and the core 115 are fabricated as a single component. A thermoplastic or metal may be used in the three-dimensional printing process that forms the armor 110 as a single component. The adhesive layer 320 is not needed according to this embodiment.

The shape of the armor 110 is not limited by any exemplary embodiment. As shown in FIG. 1, for example, the shape of the armor 110 may be designed to cover a particular area of the HUT 120 to which it is affixed. The determination of where on the HUT 120 impact absorption is required and how much impact absorption is required may be based on a particular planned activity. For example, extravehicular activity in deep space may require consideration of impacts from micrometeorites while extravehicular activity on a planetary surface may require consideration of falls. The positioning of the armor 110 on the HUT 120, its shape, and thickness may be determined based on the considerations related to the planned activity.

The armor 110 is not flexible. Further, a given module of the armor 110 must be conformally affixed to a given area of the HUT 120. Thus, based on the area of the HUT 120 to which the given module of armor 110 is to be affixed, not only the shape but also the profile shape of the armor 110 is designed and fabricated to match the profile shape of the area of the HUT 120. This is illustrated, for example, by the four modules of armor 110 in FIG. 1. Each has a profile shape that facilitates conformally affixing the armor 110 to a different area of the HUT 120.

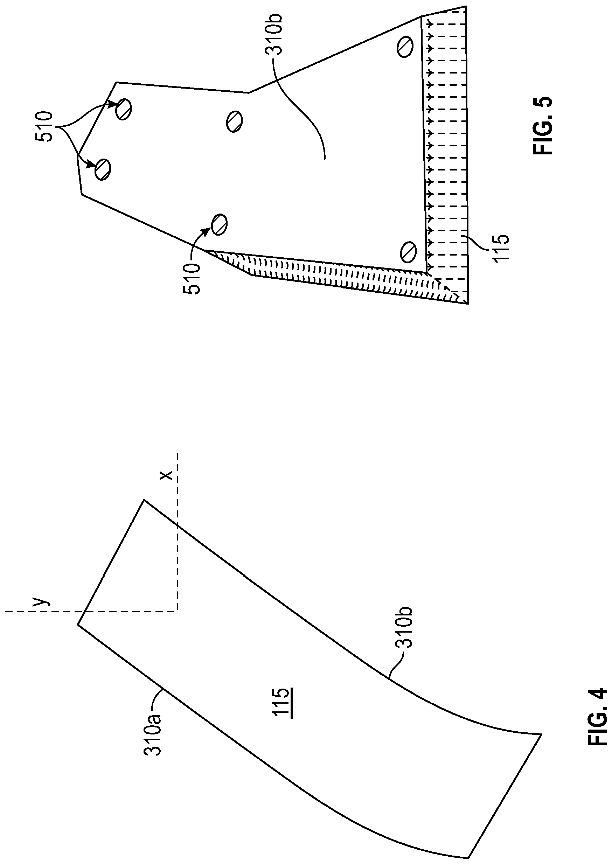

FIG. 4 illustrates an exemplary profile shape of the armor 110 according to one or more embodiments. Exemplary horizontal and vertical axes are indicated, respectively, as x and y axes. The x and y axes show the bend in the profile shape of the armor 110. As previously noted, the armor 110 is rigid rather than flexible. That is, following the curing process (in the case of the assembled armor 110) or the printing process (in the case of the additively manufactured armor 110), the armor 110 cannot be bent to conform with the profile shape of the HUT 120. Thus, obtaining the exemplary profile shape requires designing and fabricating the armor 110 accordingly.

FIG. 5 shows exemplary attachment points 510 for affixing the armor 110 to the HUT 120 according to one or more embodiments. The attachment points 510 may include, for example, hook and loop fasteners (e.g., Velcro^{®}), snaps (e.g., plastic snaps), latches, or pins. The quantity, sizes, shapes, types, and locations of the attachment points 510 shown in FIG. 5 are not intended to be limiting. In addition, the exemplary approaches to affixing the armor 110 conformally to the HUT 120 that are discussed herein are not intended to be limiting. Generally, an attachment that provides a secure hold and easy removal is contemplated.

FIGS. 6A and 6B show aspects of a module of armor 110 according an exemplary embodiment. FIG. 6A shows a cross-sectional view of the armor 110 according to the exemplary embodiment. The outer layers 310 are shown above and below a core 115. As shown in FIG. 3, adhesive layers 320 may be included between each of the outer layers 310 and the core 115 when the armor 110 is not fabricated via additive manufacturing. FIG. 6B shows an trimetric view of the core 115 of the armor 110 according to the exemplary embodiment. As shown in FIG. 6B, the core 115 may be made up of a repeating pattern of cells 610, which are spaces whose shapes are defined by cell walls 620. Each of the cell walls 620 extends from one outer layer 310 (or intervening adhesive layer 320) to the other outer layer 310 (or intervening other adhesive layer 320). This orientation may be referred to as vertical or out-of-plane with the outer layers 310.

FIGS. 7A and 7B show aspects of a module of armor 110 according an exemplary embodiment. FIG. 7A shows a cross-sectional view of the armor 110 according to the exemplary embodiment. The outer layers 310 are shown above and below a core 115. As shown in FIG. 3 and noted with reference to FIG. 6A, adhesive layers 320 may be included between each of the outer layers 310 and the core 115 when the armor 110 is not fabricated via additive manufacturing. FIG. 7B shows an trimetric view of the core 115 of the armor 110 according to the exemplary embodiment. The core 115 is made up of a repeating pattern of cells 610 whose shapes are defined by cell walls 620. As a comparison with FIG. 6B indicates, the shapes of the cells 610 are the same, but the orientation of each cell 610 is different between FIGS. 6B and 7B. As in the exemplary embodiment of FIG 6A, the cell walls 620 shown in FIG. 7A extend from one outer layer 310 (or intervening adhesive layer 320) to the other outer layer 310 (or intervening other adhesive layer 320).

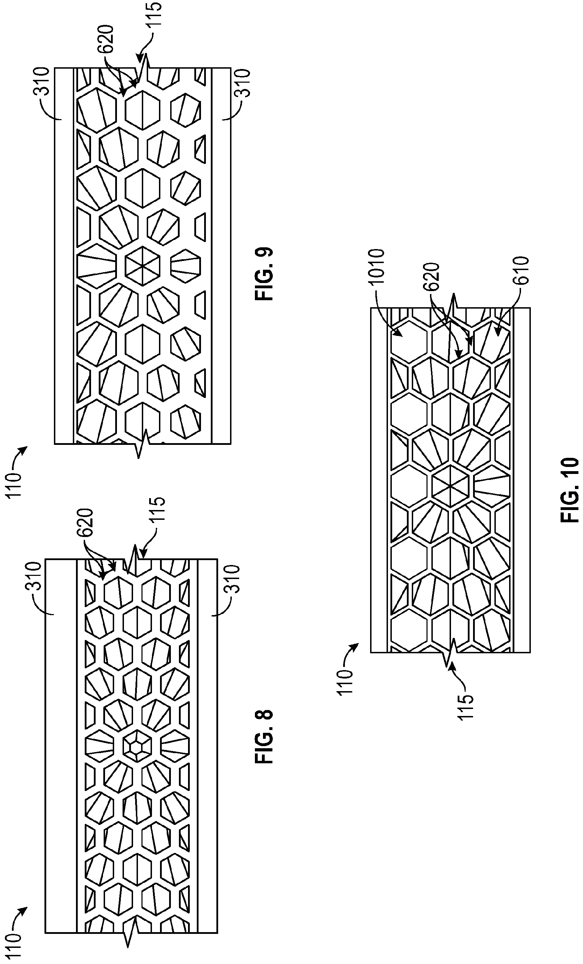

FIG. 8 shows a perspective side view of armor 110 according to an exemplary embodiment. As a comparison with FIGS. 6A and 7A indicates, the orientation of the core 115 is horizontal or in-plane with the outer layers 310 in the exemplary embodiment shown in FIG. 8. That is, the cell walls 620 extend from front to back in the view of FIG. 8, parallel to the axial plane as each of the outer layers 310. This horizontal orientation may increase impact absorption of the armor 110 by making the core 115 less rigid in comparison with the vertical orientation shown in FIGS. 6A and 7A.

FIG. 9 shows a perspective side view of armor 110 according to an exemplary embodiment. As a comparison with FIG. 8 indicates, the core 115 of the armor 110 shown in FIG. 9 also has a horizontal or in-plane orientation relative to the outer layers 310. However, while the cell walls 620 of the core 115 shown in FIG. 8 have a uniform thickness, the cell walls 620 of the core 115 shown in FIG. 9 have a thickness that increases from a side adjacent to one outer layer 310 to a side adjacent to the other outer layer 310 (i.e., top to bottom according to the view in FIG. 9). The variation in thickness from one outer layer 310 to the other is the same over the width of the core 115 according to the view in FIG. 9. The thicker cell walls 620 may be closer to outer layer 310 that is affixed to the HUT 120. As such, the variation in thickness may act to absorb impact force (from a direction of the opposite outer layer 310) to a lesser degree as the HUT 120 is reached to further protect the HUT 120 from damage or a breach.

FIG. 10 shows a perspective side view of armor 110 according to an exemplary embodiment. The core 115 of the armor 110 is in-plane with the outer layers 310. As shown, some of the cells 610 are filled with foam 1010. How many and which cells 610 are filled is not intended to be limited by the exemplary illustration in FIG. 10. The foam 1010 may enhance the impact absorption of the armor 110. Specifically, more force may be absorbed by the core 115 based on the foam 1010. The foam 1010 may be added to one or more cells 610 in any of the exemplary embodiments.

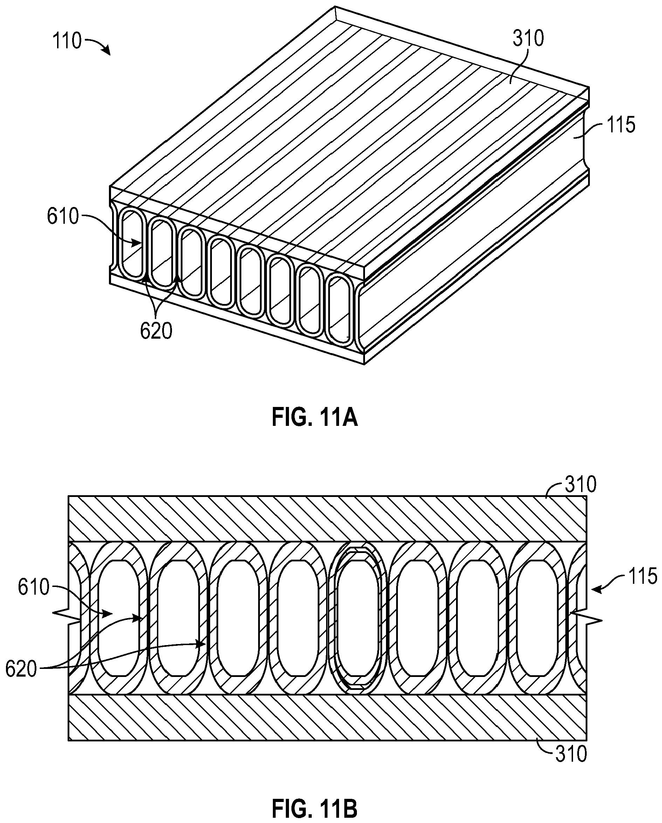

FIGS. 11A and 11B show aspects of a module of armor 110 according an exemplary embodiment. FIG. 11A shows an isometric view of the armor 110 according to the exemplary embodiment. FIG. 11B shows a cross-sectional view. The core 115 between the outer layers 310 includes one layer of cells 610 in the illustration. However, additional layers of cells 610 may be added as needed.

That is, in any of the embodiments, based on where on the HUT 120 a particular module of armor 110 is to be affixed, the thickness of the armor 110 may be varied. Fabricating the armor 110 via additive manufacturing, in particular, facilitates adaptively generating armor 110 based on the location on the HUT 120 and the application. For example, if the additive manufacturing is facilitated in a deep space vehicle, armor 110 may be designed and added based on an upcoming extravehicular mission. Additionally, in any of the embodiments, cell walls 620 may be corrugated.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. Modular armor for a hard upper torso (HUT) of an atmospheric suit that maintains a specific atmosphere within the suit, the armor comprising:
a first outer layer (310a) including a first surface and a second surface opposite the first surface;
a second outer layer (310b) including a first surface and a second surface opposite the first surface; and
a core (115) sandwiched between the first surface of the first outer layer (310a) and the first surface of the second outer layer (310b), wherein the armor is fabricated such that the second surface of the first outer layer (310a) is conformally affixed to the HUT.

2. The armor according to claim 1, further comprising a first adhesive layer between the first surface of the first outer layer (310a) and the core (115), the first adhesive layer configured to adhere the first outer layer (310a) to the core (115), and a second adhesive layer between the first surface of the second outer layer (310b) and the core (115), the second adhesive layer configured to adhere the second outer layer (310b) to the core (115).

3. The armor according to claim 2, wherein the first outer layer (310a) and the second outer layer (310b) are composite laminate layers.

4. The armor according to claim 2, wherein the core (115) includes titanium, aluminum, paper core, or rubber.

5. The armor according to any preceding claim, wherein the first outer layer (310a), the second outer layer (310b), and the core (115) are fabricated via additive manufacturing as a single component, and optionally wherein the single component is fabricated using a thermoplastic or metal.

6. The armor according to any preceding claim, wherein the second surface of the first outer layer (310a) is affixed to the HUT with hook and loop fasteners, snaps, fasteners, or pins.

7. The armor according to any preceding claim, wherein the core (115) is formed as a repeating pattern of cells, each cell being a space with a shape defined by cell walls, and the cell walls of each of the cells being parallel with the first outer layer (310a) and the second outer layer (310b) or being perpendicular to the first outer layer (310a) and the second outer layer (310b), and optionally wherein one or more of the cells is filled with foam.

8. A hard upper torso (HUT) of an atmospheric suit that maintains a specific atmosphere within the suit, the hard upper torso comprising:
an upper neck ring configured as an attachment to a helmet; and
modular armor comprising:
a first outer layer (310a) including a first surface and a second surface opposite the first surface;
a second outer layer (310b) including a first surface and a second surface opposite the first surface; and
a core (115) sandwiched between the first surface of the first outer layer (310a) and the first surface of the second outer layer (310b), wherein the armor is fabricated such that the second surface of the first outer layer (310a) is conformally affixed to the HUT.

9. The HUT according to claim 8, wherein the modular armor further comprises a first adhesive layer between the first surface of the first outer layer (310a) and the core (115), the first adhesive layer configured to adhere the first outer layer (310a) to the core (115), and a second adhesive layer between the first surface of the second outer layer (310b) and the core (115), the second adhesive layer configured to adhere the second outer layer (310b) to the core (115), and optionally wherein the first outer layer (310a) and the second outer layer (310b) are composite laminate layers and the core (115) includes titanium, aluminum, paper core, or rubber.

10. The HUT according to claim 8 or 9, wherein the first outer layer (310a), the second outer layer (310b), and the core (115) are fabricated as a single component using additive manufacturing, and optionally wherein the single component is fabricated using a thermoplastic or metal.

11. The HUT according to any of claims 8 to 10, wherein the second surface of the first outer layer (310a) is affixed to the HUT with hook and loop fasteners, snaps, fasteners, or pins.

12. The HUT according to any of claims 8 to 11, wherein the core (115) is formed as a repeating pattern of cells, each cell being a space with a shape being defined by cell walls, and the cell walls of each of the cells being parallel with the first outer layer (310a) and the second outer layer (310b) or being perpendicular to the first outer layer (310a) and the second outer layer (310b), and optionally wherein one or more of the cells is filled with foam.

13. A method of assembling a hard upper torso (HUT) of an atmospheric suit that maintains a specific atmosphere within the suit to include modular armor, the method comprising:
forming a first outer layer (310a) including a first surface and a second surface opposite the first surface;
forming a second outer layer (310b) including a first surface and a second surface opposite the first surface;
forming a core (115) sandwiched between the first surface of the first outer layer (310a) and the first surface of the second outer layer (310b); and
conformally affixing the second surface of the first outer layer (310a) to the HUT.

14. The method according to claim 13, further comprising adhering the first outer layer (310a) to the core (115) with a first adhesive layer and adhering the second outer layer (310b) to the core (115) with a second adhesive layer.

15. The method according to claim 13 or 14, wherein the forming the first outer layer (310a), the forming the second outer layer (310b), and the forming the core (115) is as a single component based on additive manufacturing.
